# EUROPEAN PATENT APPLICATION

(11) **EP 3 007 175 A1**
(43) Date of publication of application: **13.04.2016**
(21) Application number: 13885782.6
(22) Date of filing: 29.05.2013
(51) Int. Cl.: G21C 17/10

(54) **HYBRID REACTOR IN-CORE DETECTOR ASSEMBLY FOR CORE MONITORING AND PROTECTION**

(71) Applicant: Korea Hydro & Nuclear Power Co., Ltd., Gyeongju-si, Gyeongsangbuk-do 780-010 (KR)
(72) Inventor: CHA, Kyoon Ho, Daejeon 305-343 (KR); SHIN, Ho Cheol, Daejeon 305-343 (KR); ROH, Kyung Ho, Daejeon 305-343 (KR); CHOI, Yu Sun, Daejeon 305-343 (KR); BAE, Seong Man, Seoul 135-881 (KR); JUN, Hwang Yong, Daejeon 305-343 (KR)
(74) Representative: Ipside
(86) International application number: PCT/KR2013/004693
(87) International publication number: WO 2014/192995

(57) **Abstract**

The present invention relates to a hybrid in-core detector assembly for core monitoring and protection and, specifically, a hybrid in-core detector assembly for simultaneously carrying out a core monitoring function and a core protection function, comprising: vanadium detectors and a background detector for carrying out the core monitoring function; platinum detectors for carrying out the core protection function; and one integrated core exit thermocouple. According to the present invention, since the in-core detector assembly using the vanadium detectors and the platinum detectors is a hybrid type, the core monitoring function and the core protection function can be simultaneously carried out.

## Description

### [Technical Field]

The present invention relates to an in-core detector assembly, and more particularly, to a hybrid in-core detector assembly capable of carrying out a core monitoring function and a core protection function at the same time.

### [Background Art]

The most important indicator for safe operation of a nuclear reactor is a power spike coefficient, and in order to monitor a value of the power peaking factor, a three dimensional core power distribution must be measured continuously and accurately. An in-core detector used for carrying out core-monitoring of a nuclear power plant is divided into a movable type (for WH type nuclear power plants) and a fixed type (for OPR1000 nuclear power plants).

The movable type in-core detector can measure three dimensional core power distribution accurately, but cannot carry out on-line measurement because measuring power distribution only periodically. On the other hand, the fixed type in-core detector can carry out on-line measurement, but must be replaced with a new one periodically because it is limited in the number of axial core detectors, is slow in reaction time and burns in a core.

In the meantime, a fixed type in-core detector assembly which is used in the OPR1000 nuclear power plant is inserted and fixed into a guide tube located inside the center of a nuclear fuel assembly during normal operation, and monitors neutron flux distribution of a nuclear reactor core at rated thermal power of more than 20% in real time. 45 fixed-type in-core detector assemblies are mounted at in-core places of the nuclear reactor that it is judged that it is possible to monitor power distribution in the core.

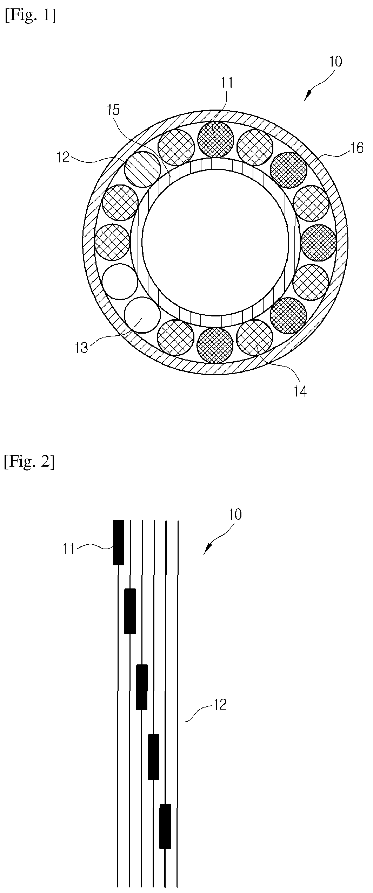

As shown in FIGS. 1 and 2, a conventional in-core detector assembly 10 includes five rhodium detectors 11, one background detector 12, two core exit thermocouples (core exit T/C) 13 which can measure coolant exit temperature of a core, a filler wire 14 which serves to fill a space between a central member assembly and the detector, an extension tube 15 disposed inside, and a sheath tube 16 disposed outside.

Furthermore, the five rhodium detectors 11 disposed inside each in-core detector assembly 10 are about 16 inches (40cm) in length and are respectively 10%, 30%, 50%, 70% and 90% as high as the nuclear fuel assembly to monitor power distribution of the core.

Meanwhile, a conventional core protection system requires a conservatism calculation because using an ex-core detector in order to calculate departure from nucleate boiling ratio and local power density which are main core safety parameters. In a case that the ex-core detector is used, because it is impossible to accurately measure three dimensional core power distribution which is the most important indicator for safe operation of the nuclear reactor, departure from nucleate boiling ratio and local power density are calculated using a virtual conservatism power distribution.

Therefore, if three dimensional core power distribution is directly calculated using an in-core detector of a safety grade and is applied to the core protection system, a great shutdown margin or safety margin can be obtained. So, importance of the safety-grade in-core detector has been emphasized. However, a conventional rhodium in-core detector has several disadvantages in that it is a depleting type detector which has a lifespan of two to three cycles (three to four years) and it cannot be used in a safety system because it has uncertainty due to time delay of measurement signals.

The conventional in-core detector serves as a core monitoring function, and the ex-core detector serves as a core protection function. In addition, the conventional rhodium in-core detector which has the lifespan of two to three cycles causes an increase of detector replacement costs and requires security of a space for storing high-level wastes. Accordingly, the conventional in-core detector increases burdens for operating nuclear power plants.

In the meantime, a prior art discloses a hybrid-type in-core detector assembly including: a platinum-solid detector which has an emitter electrode formed in the middle of the inside of a cladding tube forming a collector electrode, an axial cable connected to one end of the emitter electrode for transferring a signal and an insulator filled in a space between the cladding tube and the emitter electrode to which the axial cable is connected; a vanadium detector which has an emitter electrode formed in the middle of the inside of a cladding tube forming a collector electrode, an axial cable connected to one end of the emitter electrode for transferring a signal and an insulator filled in a space between the cladding tube and the emitter electrode to which the axial cable is connected; and a background detector which has an axial cable formed inside a cladding tube forming a collector electrode for transferring a signal and an insulator filled in a space between the cladding tube and the axial cable. The platinum-solid detector, the vanadium detector and the background neutron detector are formed integrally.

### [Technical Problem]

Accordingly, the present invention has been made in an effort to solve the above-mentioned problems occurring in the prior arts, and it is an object of the present invention to provide a hybrid in-core detector assembly, which can carry out a core monitoring function and a core protection function at the same time and can extend the lifespan of the detector by using non-depleting or low-depleting materials as emitter materials reacting to neutrons.

### [Technical Solution]

To achieve the above objects, the present invention provides a hybrid in-core detector assembly capable of carrying out a core monitoring function and a core protection function at the same time, the hybrid in-core detector assembly including: vanadium detectors and a background detector for carrying out the core monitoring function; platinum detectors for carrying out the core protection function; and one integrated core exit thermocouple.

Here, signals generated from the vanadium detectors are inputted into a core monitoring system and used to calculate three dimensional core power distribution to carry out the core monitoring function.

Moreover, the number of the vanadium detectors is five, and the five vanadium detectors have a predetermined length and are respectively 10%, 30%, 50%, 70% and 90% as high as a nuclear fuel assembly.

Furthermore, signals generated from the platinum detectors are inputted into a core protection system to carry out the core protection function.

Additionally, the number of the platinum detectors is three, and the platinum detectors are arranged respectively to take charge of a third of the core.

### [Advantageous Effects]

The hybrid in-core detector assembly according to the present invention can carry out a core monitoring function and a core protection function at the same time by using the vanadium detectors and the platinum detectors.

Moreover, the hybrid in-core detector assembly according to the present invention can directly measure the state of the core to enhance accuracy in calculation of three dimensional power distribution when an in-core detector based core protection system is applied because platinum capable of prompt responding is used as an emitter material. Therefore, the hybrid in-core detector assembly according to the present invention can contribute to power increase of nuclear power plants by removing conservatism when the ex-core detector is used and increasing margins in departure from nucleate boiling ratio and local power density.

Furthermore, the hybrid in-core detector assembly according to the present invention can extend the lifespan of the detector by applying non-depleting or low-depleting materials, such as vanadium or platinum, as emitter materials reacting to neutrons. Therefore, the hybrid in-core detector assembly according to the present invention can reduce an amount of in-core detector wastes by a third of the prior arts after using high-level radioactive materials, and hence, it can secure a space for using high-level wastes and reduce nuclear plant workers'radiation exposure.

### [Description of Drawings]

FIG. 1 is a sectional view of a structure of a conventional rhodium in-core detector assembly.
FIG. 2 is a conceptual diagram of the structure of the conventional rhodium in-core detector assembly.
FIG. 3 is a conceptual diagram of a structure of a hybrid in-core detector assembly for core monitoring and core protection according to a preferred embodiment of the present invention.
FIG. 4 is a sectional view of the structure of the hybrid in-core detector assembly for core monitoring and core protection according to the preferred embodiment of the present invention.

### [Embodiment]

Reference will be now made in detail to the preferred embodiment of the present invention with reference to the attached drawings. In the description of the present invention, when it is judged that detailed descriptions of known functions or structures related with the present invention may make the essential points vague, the detailed descriptions of the known functions or structures will be omitted. Moreover, while preferred embodiments of the present invention will herein be described in detail, It should be understood that there is no intent to limit the technical idea of the present invention to the particular forms disclosed, but on the contrary, the embodiments of the invention can be changed and modified in various ways falling within the technical scope of the invention.

Hereinafter, reference will be now made in detail to the preferred embodiment of the present invention with reference to the attached drawings.

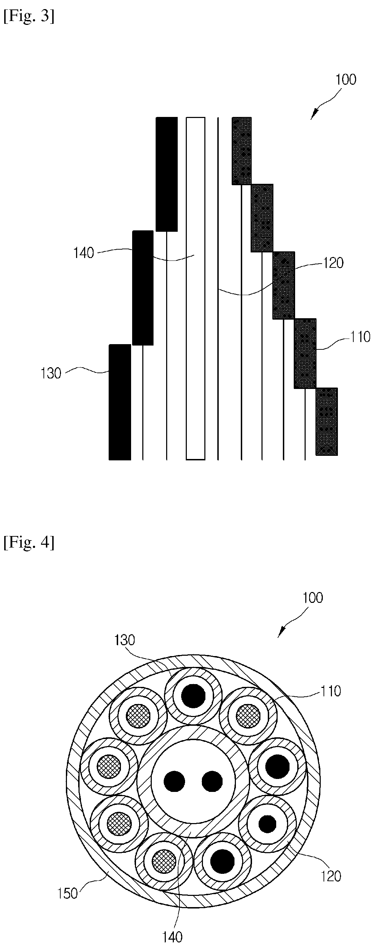

FIG. 3 is a conceptual diagram of a structure of a hybrid in-core detector assembly for core monitoring and core protection according to a preferred embodiment of the present invention, and FIG. 4 is a sectional view of the structure of the hybrid in-core detector assembly for core monitoring and core protection according to the preferred embodiment of the present invention.

Technical points of the hybrid in-core detector assembly for core monitoring and core protection according to a preferred embodiment of the present invention is to carry out a core monitoring function and a core protection function at the same time and to extend the lifespan of the detector by using non-depleting or low-depleting materials as emitter materials reacting to neutrons.

As shown in the drawings, the hybrid in-core detector assembly 100 according to a preferred embodiment of the present invention can carry out a core monitoring function and a core protection function at the same time, and includes: five vanadium detectors 110 and one background detector for carrying out the core monitoring function; three platinum detectors 130 for carrying out the core protection function; and one integrated core exit thermocouple 140. The reference numeral "150" designates a sheath tube disposed outside.

That is, in order to carry out the core monitoring function, the five vanadium detectors 110 and the one background detector 120 are disposed like the rhodium detector used in a conventional core operating limit supervisory system (COLSS). In this instance, signals generated from the five vanadium detectors 110 are inputted into a core monitoring system and used to calculate three dimensional core power distribution to carry out the core monitoring function. In other words, the signals are used to accurately monitor core power distribution and provide information of local neutron distribution. The five vanadium detectors 110 are each 30 inches (76cm) in length and are respectively 10%, 30%, 50%, 70% and 90% as high as a nuclear fuel assembly.

Moreover, in order to carry out the core protection function, the three platinum detectors 130 are arranged respectively to take charge of a third of the core and can use three upper, middle and lower ex-core detector input algorithms. In this instance, signals generated from the platinum detectors 130 are inputted into the core protection system to carry out the core protection function.

Furthermore, the conventional rhodium in-core detector includes the two separated core exit thermocouples, but the present invention includes one integrated core exit thermocouple 140. In this instance, the core exit thermocouple 140 may be arranged in a central member assembly space of the conventional in-core detector.

As described above, the hybrid in-core detector assembly 100 according to the preferred embodiment of the present invention adopts a hybrid mode using the vanadium detectors 110 and the platinum detectors 130 to carry out the core monitoring function and the core protection function at the same time.

In addition, the hybrid in-core detector assembly according to the present invention can directly measure the state of the core to enhance accuracy in calculation of three dimensional power distribution when an in-core detector based core protection system is applied because platinum capable of prompt responding is used as an emitter material. Therefore, the hybrid in-core detector assembly according to the present invention can contribute to power increase of nuclear power plants by removing conservatism when the ex-core detector is used and increasing margins in departure from nucleate boiling ratio and local power density.

Moreover, the hybrid in-core detector assembly according to the present invention can extend the lifespan of the detector by applying non-depleting or low-depleting materials, such as vanadium or platinum, as emitter materials reacting to neutrons. Therefore, the hybrid in-core detector assembly according to the present invention can reduce an amount of in-core detector wastes by a third of the prior arts after using high-level radioactive materials, and hence, it can secure a space for using high-level wastes and reduce nuclear plant workers'radiation exposure.

The following table 1 shows comparison of specifications and effect between the hybrid in-core detector assembly according to the present invention and the conventional rhodium detector.

**[Table 1]**

| Division | Rhodium detector | Hybrid in-core detector | | Effect |
|---|---|---|---|---|
| | | Vanadium | Platinum | |
| Emitter material | Rh-45 | V-51 | Pt-105 | |
| Emitter diameter | 0.0457cm | 0.113cm | 0.113cm | Equal signal |

| Responding time/use of filter | 175sec/27sec | ∼500sec/several sec | prompt | Prompt responding time |
|---|---|---|---|---|
| Lifespan of detector | < 3 years | > 10 years | > 10 years | Extension of lifespan |

In addition, in case of the hybrid in-core detector assembly 100 for core monitoring and core protection according to the preferred embodiment of the present invention, it is preferable to evaluate the minimum current levels of the vanadium detectors 110 and the platinum detectors 130 which satisfy a signal-to-noise ratio using a sensitivity function of the detector and determine emitter diameters of the vanadium detectors 110 and the platinum detectors 130 in consideration of production of the in-core detector in order to decide mechanical configurations, such as a diameter, a length and so on.

Moreover, because vanadium and platinum are relatively small in neutron absorption cross section compared with rhodium, vanadium and platinum with identical standard are relatively small in detector signal compared with rhodium. Therefore, preferably, the hybrid in-core detector assembly 100 for core monitoring and core protection according to the preferred embodiment of the present invention keeps the same outer diameter as the rhodium detector assembly but increases emitter diameters of the vanadium detectors 110 and the platinum detectors 130 2.5 times as large as that of the conventional rhodium detector to maintain the signal level of the conventional rhodium detector.

In the meantime, while the hybrid in-core detector assembly for core monitoring and protection according to the present invention has been particularly shown and described with reference to the specific embodiments thereof, it will be understood by those of ordinary skill in the art that the scope of the present invention is not limited to the particular embodiments and various alternatives, changes and modifications may be made therein without departing from the technical idea and scope of the present invention.

Therefore, it would be understood that the embodiments disclosed in the present invention and the attached drawings are not to limit the technical idea of the present invention but to describe the present invention, and the technical and protective scope of the present invention shall be defined by the illustrated embodiments and the attached drawings. It should be also understood that the protective scope of the present invention is interpreted by the following claims and all technical ideas within the equivalent scope belong to the technical scope of the present invention.

## Claims

1. A hybrid in-core detector assembly (100) capable of carrying out a core monitoring function and a core protection function at the same time characterized that it comprises:
- vanadium detectors (110) and a background detector (120) for carrying out the core monitoring function;
- platinum detectors (130) for carrying out the core protection function; and
- one integrated core exit thermocouple (140).

2. The hybrid in-core detector assembly according to claim 1, wherein signals generated from the vanadium detectors (110) are inputted into a core monitoring system and used to calculate three dimensional core power distribution to carry out the core monitoring function.

3. The hybrid in-core detector assembly according to claim 1, wherein the number of the vanadium detectors (110) is five, and the five vanadium detectors have a predetermined length and are respectively 10%, 30%, 50%, 70% and 90% as high as a nuclear fuel assembly.

4. The hybrid in-core detector assembly according to claim 1, wherein signals generated from the platinum detectors (130) are inputted into a core protection system to carry out the core protection function.

5. The hybrid in-core detector assembly according to claim 1, wherein the number of the platinum detectors (130) is three, and the platinum detectors are arranged respectively to take charge of a third of the core.
